# EUROPÄISCHE PATENTSCHRIFT

(11) **EP 2 872 354 B1**
(45) Veröffentlichungstag und Bekanntmachung des Hinweises auf die Patenterteilung: **21.02.2018**
(21) Anmeldenummer: 13750320.7
(22) Anmeldetag: 14.08.2013
(51) Int. Cl.: B60L 9/22, B60L 11/18, H02P 7/28, B60L 11/00, B60L 15/20, B61C 3/02

(54) **SCHIENENFAHRZEUG MIT BATTERIEBETRIEB**
RAIL VEHICLE WITH A BATTERY DRIVE
VÉHICULE FERROVIAIRE ALIMENTÉ PAR BATTERIE

(30) Priorität: 13.09.2012 DE 102012216312
(43) Veröffentlichungstag der Anmeldung: 20.05.2015
(73) Patentinhaber: Siemens Aktiengesellschaft, 80333 München (DE)
(72) Erfinder: ROHLFING, Andreas, 91126 Rednitzhembach (DE)
(86) Internationale Anmeldenummer: PCT/EP2013/067004
(87) Internationale Veröffentlichungsnummer: WO 2014/040816

(56) Entgegenhaltungen:
- WO-A1-03/016088
- WO-A1-2006/105986
- DE-A1-102010 041 016
- US-A1- 2005 122 071

## Beschreibung

Die Erfindung betrifft ein Schienenfahrzeug und ein Verfahren zum Betreiben des Schienenfahrzeugs, welches geeignet ist zum Batteriebetrieb, und welches eine Zwischenkreisschaltung und eine Batterie umfasst.

Bei Antrieben von Schienenfahrzeugen, insbesondere bei Schienenfahrzeugen des Nahverkehrs, wird eine Gleichspannung von üblicherweise 750V bzw. 1500V aus dem Streckennetz entnommen. Diese Gleichspannung wird über einen Netzfilter, bestehend aus einer Drossel und einem Zwischenkreis-Kondensator, an einen Pulswechselrichter gekoppelt. Der Pulswechselrichter wandelt die Zwischenkreisgleichspannung in einen Dreiphasen-Wechselstrom für den Motor des Schienenfahrzeugs um. Auf Streckenabschnitten ohne Streckennetz wird das Schienenfahrzeug im Batteriebetrieb - der Energiespeicher besteht in der Regel aus Speicherkondensatoren und einer wiederaufladbaren Batterie - gefahren. Auf Grund der häufigen Anfahrvorgänge bei kurzen Haltestellenabständen und aus Gründen des Energieverbrauchs wird häufig in kleinen Geschwindigkeitsbereichen gefahren. Bei kleinen Geschwindigkeiten weist das System aus Stromrichtern und Motor einen schlechten Wirkungsgrad auf, da dieser sich mit abnehmender Geschwindigkeit verschlechtert. Trotz der kleinen Geschwindigkeit wird die Batterie daher dennoch stark beansprucht.

Die Offenlegungsschrift WO 03/016088 A1 offenbart ein Hybridfahrzeug mit einem Zwischenkreis und einem Energiespeicher. Während eines Beschleunigungsbetriebs wird Energie aus dem Energiespeicher entnommen, wodurch die Spannung des Zwischenkreises absinkt. Anschließend wird die Zwischenkreisspannung während eines Fahrbetriebs erhöht, so dass sich die niedrige Spannung am Energiespeicher nicht auf das Antriebssystem auswirkt.

Die WO 2006/105986 A1 lehrt ein Antriebssystem für ein elektrisch angetriebenes Fahrzeug mit einem Zwischenkreis, dessen Spannung in Abhängigkeit der Fahrgeschwindigkeit eingestellt werden soll.

Die Offenlegungsschrift DE 10 2010 041 016 A1 betrifft ein weiteres Verfahren zum Einstellen einer Gleichspannungszwischenkreisspannung. Die Druckschrift US 2005/0122071 A1 zeigt eine Vorrichtung und ein Verfahren zum Erzeugen einer Zugkraft für ein Fahrzeug.

Der Erfindung liegt die Aufgabe zugrunde, den Wirkungsgrad des Gesamtsystems und damit die Lebensdauer der Batterie zu erhöhen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug, insbesondere ein Schienenfahrzeug des Personenverkehrs, insbesondere des Nahverkehrs, ist geeignet zum Batteriebetrieb. Es umfasst eine Zwischenkreisschaltung und einen Energiespeicher inklusive einer Batterie. Des Weiteren kann der Energiespeicher einen oder mehrere Kondensatoren umfassen. Darüber hinaus umfasst es Mittel zum Bereitstellen einer Zwischenkreisspannung und Mittel zum Regeln, insbesondere zum Absenken und/oder Anheben der Zwischenkreisspannung zumindest zwischen einem ersten und einem zweiten Spannungsniveau, welches der Batteriespannung entspricht. Das zweite Spannungsniveau ist dabei niedriger als das erste Spannungsniveau. Das erste Spannungsniveau liegt beispielsweise bei ca. 750V. Das zweite Spannungsniveau beträgt beispielsweise ca. 450V. Besonders Vorteilhaft ist eine Kombination aus wiederaufladbarer Batterie und einem oder mehreren Kondensatoren zur Bereitstellung von Lastsprüngen. Auch wenn das Schienenfahrzeug ausschließlich mit Energie aus den Kondensatoren betrieben wird, spricht der Fachmann dennoch vom Batteriebetrieb, solange eine Batterie vorgehalten und mit den Kondensatoren gekoppelt ist.

Erfindungsgemäß wird das Schienenfahrzeug im Batteriebetrieb auf dem zweiten Spannungsniveau angefahren. Bei Erreichen einer vorgegebenen Geschwindigkeit des Schienenfahrzeugs wird weitergebildet die Zwischenkreisspannung vom zweiten Spannungsniveau auf das erste Spannungsniveau angehoben.

Das Schienenfahrzeug ist weitergebildet zudem geeignet zum Streckennetzbetrieb. Bei höheren Geschwindigkeiten im Streckennetzbetrieb wird die Zwischenkreisspannung auf dem ersten Spannungsniveau gehalten.

Beim Umschalten vom Streckennetzbetrieb auf den Batteriebetrieb wird die Zwischenkreisspannung vom ersten Spannungsniveau auf das zweite Spannungsniveau abgesenkt. Entsprechend wird beim Umschalten vom Batteriebetrieb auf den Streckennetzbetrieb die Zwischenkreisspannung vom zweiten Spannungsniveau auf das erste Spannungsniveau angehoben.

Gemäß einer weiteren Weiterbildung weist das Schienenfahrzeug zumindest einen Gleichrichter und zusätzlich zur Batterie zumindest einen Zwischenkreis-Kondensator auf. Der Zwischenkreis-Kondensator dient zur Energiepufferung in der Zwischenkreisschaltung und zur hochdynamischen Entnahme und/oder Einspeisung von Energie.

Als Mittel zum Regeln, insbesondere zum Absenken und/oder Anheben der Zwischenkreisspannung umfasst das Schienenfahrzeug dazu gemäß einer weiteren Weiterbildung einen Zweiquadrantensteller als Hoch-/Tiefsetzsteller Gleichrichter.

Die Mittel zum Regeln, insbesondere zum Anheben und/oder Absenken der Zwischenkreisspannung sind insbesondere dazu geeignet die Zwischenkreisspannung nach einer vorgegebenen Funktion, beispielsweise linear, zu regeln, insbesondere anzuheben und/oder abzusenken.

Bei der Batterie handelt es sich beispielsweise um eine Li-Ionen-, eine Li-Polymer- oder eine Ni-Metallhydrid-Batterie. Sie weist eine Kapazität von beispielsweise ca. 80 Ah auf, was dem gültigen technischen Sachstand betrifft. Zukünftig sind bei gleichem Gewicht auch höhere Werte zu erwarten. In einer Ausführungsform weist die Batterie einen Energieinhalt von ca. 46 kWh auf. Der Energieinhalt ist ein Maß an elektrischer Leistung, welche der Batterie in einer Zeiteinheit entnommen werde kann.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.

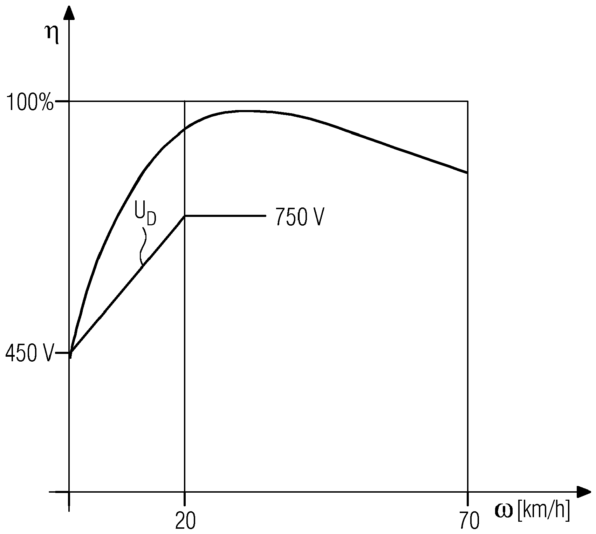

In Fig. 1 ist der Wirkungsgrad η über der Geschwindigkeit ω eines erfindungsgemäßen Schienenfahrzeugs aufgetragen. Darüber hinaus ist der Verlauf einer Zwischenkreisspannung über die Geschwindigkeit ω eines erfindungsgemäßen Schienenfahrzeugs dargestellt.

Das Schienenfahrzeug wird im Batteriebetrieb auf dem zweiten Spannungsniveau, hier ca. 450 V, angefahren. Mit zunehmender Geschwindigkeit wird die Zwischenkreisspannung U_{D} vom zweiten Spannungsniveau auf das erste Spannungsniveau, hier ca. 750 V, angehoben, welche sie bei einer vorgegebenen Geschwindigkeit des Schienenfahrzeugs erreicht. Die Geschwindigkeit ist dabei abhängig von der Wirkungsgradkennlinie von Motor und Umrichter. Sie beträgt hier ca. 20 km/h. Das Anheben der Zwischenkreisspannung U_{D} kann dabei linear, wie hier, oder gemäß einer anderen Funktion erfolgen.

Wird das Schienenfahrzeug unterhalb der vorgegebenen Geschwindigkeit bewegt, wird die Zwischenkreisspannung U_{D} wieder entsprechend abgesenkt. Gleiches gilt für beim Umschalten auf Batteriebetrieb. Wird das Schienenfahrzeug ausschließlich im Batteriebetrieb betrieben, wird sie insbesondere beim Halten wieder aufgeladen.

## Patentansprüche

1. Verfahren zum Betreiben eines Schienenfahrzeugs geeignet zum Batteriebetrieb, welches eine Zwischenkreisschaltung und eine Batterie umfasst, wobei es Mittel zum Bereitstellen einer Zwischenkreisspannung und Mittel zum Absenken und Anheben der Zwischenkreisspannung zwischen einem ersten und einem zweiten Spannungsniveau aufweist, wobei das zweite Spannungsniveau der Batteriespannung entspricht und das Anfahren des Schienenfahrzeugs im Batteriebetrieb erfolgt, wobei die Zwischenkreisspannung auf dem zweiten Spannungsniveau gehalten wird **dadurch gekennzeichnet, dass** das zweite Spannungsniveau niedriger als das erste Spannungsniveau ist, und die Zwischenkreisspannung mit zunehmender Geschwindigkeit des Schienenfahrzeugs linear oder gemäß einer anderen Funktion vom zweiten Spannungsniveau auf das erste Spannungsniveau angehoben wird, welches erste Spannungsniveau sie bei einer vorgegebenen Geschwindigkeit des Schienenfahrzeugs erreicht.

2. Verfahren nach Anspruch 1, **dadurch gekennzeichnet, dass** beim Umschalten vom Streckennetzbetrieb auf den Batteriebetrieb die Zwischenkreisspannung vom ersten Spannungsniveau auf das zweite Spannungsniveau abgesenkt wird.

3. Verfahren nach Anspruch 2, **dadurch gekennzeichnet, dass** beim Umschalten vom Batteriebetrieb auf den Streckennetzbetrieb die Zwischenkreisspannung vom zweiten Spannungsniveau auf das erste Spannungsniveau angehoben wird.

4. Verfahren nach einem der Ansprüche 1 bis 3, **dadurch gekennzeichnet, dass** das erste Spannungsniveau 750V und, dass das zweite Spannungsniveau 450V beträgt.

5. Verfahren nach Anspruch 1, **dadurch gekennzeichnet, dass** das Schienenfahrzeug einen Zweiquadrantensteller als Mittel zum Absenken und/oder Anheben der Zwischenkreisspannung umfasst.

6. Verfahren nach Anspruch 1, **dadurch gekennzeichnet, dass** die Mittel zum Anheben und/oder Absenken der Zwischenkreisspannung geeignet sind, die Zwischenkreisspannung nach einer vorgegebenen Funktion, anzuheben und/oder abzusenken.

7. Verfahren nach Anspruch 1, **dadurch gekennzeichnet, dass** das Schienenfahrzeug einen Zwischenkreis-Kondensator umfasst.

8. Verfahren nach Anspruch 1, **dadurch gekennzeichnet, dass** die Batterie eine Kapazität von mindestens 80 Ah aufweist.

9. Verfahren nach Anspruch 1, **dadurch gekennzeichnet, dass** das Schienenfahrzeug geeignet ist zum Streckennetzbetrieb.

## Claims

1. Method for operating a rail vehicle which is suitable for battery operation and comprises an intermediate circuit and a battery, wherein it has means for providing an intermediate circuit voltage and means for lowering and raising the intermediate circuit voltage between a first and a second voltage level, wherein the second voltage level corresponds to the battery voltage and the rail vehicle is started up with battery operation, wherein the intermediate circuit voltage is kept at the second voltage level, **characterized in that** the second voltage level is lower than the first voltage level, and, as the speed of the rail vehicle increases, the intermediate circuit voltage is raised in a linear manner or in line with another function from the second voltage level to the first voltage level, which first voltage level it reaches at a prespecified speed of the rail vehicle.

2. Method according to Claim 1, **characterized in that** the intermediate circuit voltage is lowered from the first voltage level to the second voltage level when a changeover is made from rail network operation to battery operation.

3. Method according to Claim 2, **characterized in that** the intermediate circuit voltage is raised from the second voltage level to the first voltage level when a changeover is made from battery operation to rail network operation.

4. Method according to one of Claims 1 to 3, **characterized in that** the first voltage level is 750 V, and **in that** the second voltage level is 450 V.

5. Method according to Claim 1, **characterized in that in that** the rail vehicle comprises a two-quadrant converter as the means for lowering and/or raising the intermediate circuit voltage.

6. Method according to Claim 1, **characterized in that** the means for raising and/or lowering the intermediate circuit voltage are suitable for raising and/or for lowering the intermediate circuit voltage in line with a prespecified function.

7. Method according to Claim 1, **characterized in that** the rail vehicle comprises an intermediate circuit capacitor.

8. Method according to Claim 1, **characterized in that** the battery has a capacitance of at least 80 Ah.

9. Method according to Claim 1, **characterized in that** the rail vehicle is suitable for rail network operation.

## Revendications

1. Procédé pour faire fonctionner un véhicule ferroviaire propre à fonctionner sur batterie, qui comprend un circuit intermédiaire et une batterie, dans lequel le véhicule a des moyens de mise à disposition d'une tension de circuit intermédiaire et des moyens d'abaissement et d'élévation de la tension de circuit intermédiaire entre un premier et un deuxième niveau de tension, le deuxième niveau de tension correspondant à la tension de la batterie et le démarrage du véhicule ferroviaire s'effectuant en fonctionnement sur batterie, la tension de circuit intermédiaire étant maintenue au deuxième niveau de tension, **caractérisé en ce que** le deuxième niveau de tension est plus bas que le premier niveau de tension et la tension de circuit intermédiaire est élevée linéairement ou suivant une autre fonction, au fur et à mesure qu'augmente la vitesse du véhicule ferroviaire du deuxième niveau de tension au premier niveau de tension, lequel premier niveau de tension est atteint à une vitesse donnée à l'avance du véhicule ferroviaire.

2. Procédé suivant la revendication 1, **caractérisé en ce que**, lors du passage du fonctionnement sur réseau ferroviaire au fonctionnement sur batterie, la tension de circuit intermédiaire est abaissée du premier niveau de tension au deuxième niveau de tension.

3. Procédé suivant la revendication 2, **caractérisé en ce que**, lors du passage du fonctionnement sur batterie au fonctionnement sur réseau ferroviaire, la tension de circuit intermédiaire est élevée du deuxième niveau de tension au premier niveau de tension.

4. Procédé suivant l'une des revendication 1 à 3, **caractérisé en ce que** le premier niveau de tension est de 750V et **en ce que** le deuxième niveau de tension est de 450V.

5. Procédé suivant la revendication 1, **caractérisé en ce que** le véhicule ferroviaire comprend un régleur à deux cadrans comme moyen pour abaisser et/ou élever la tension de circuit intermédiaire.

6. Procédé suivant la revendication 1, **caractérisé en ce que** les moyens propres à élever et/ou à abaisser la tension de circuit intermédiaire élèvent et/ou abaissent la tension de circuit intermédiaire suivant une fonction donnée à l'avance.

7. Procédé suivant la revendication 1, **caractérisé en ce que** le véhicule ferroviaire comprend un condensateur de circuit intermédiaire.

8. Procédé suivant la revendication 1, **caractérisé en ce que** la batterie a une capacité d'au moins 80 Ah.

9. Procédé suivant la revendication 1, **caractérisé en ce que** le véhicule ferroviaire est propre à fonctionner sur réseau ferroviaire.
